# EUROPÄISCHE PATENTSCHRIFT

(11) **EP 1 489 728 B1**
(45) Veröffentlichungstag und Bekanntmachung des Hinweises auf die Patenterteilung: **23.06.2010**
(21) Anmeldenummer: 04006780.3
(22) Anmeldetag: 20.03.2004
(51) Int. Cl.: H02M 1/12

(54) **Elektrische Schaltung für einen spannungseinprägenden Umrichter**
Electric circuit for a voltage converter
Circuit électrique pour un convertisseur de tension

(30) Priorität: 18.06.2003 DE 10327407
(43) Veröffentlichungstag der Anmeldung: 22.12.2004
(73) Patentinhaber: Converteam GmbH, 12277 Berlin (DE)
(72) Erfinder: Zingel, Reinhard, 12207 Berlin (DE)
(74) Vertreter: Schäfer, Wolfgang

(56) Entgegenhaltungen:
- EP-A- 0 222 261
- EP-A- 1 248 344
- WO-A-91/09451
- DE-A1- 4 224 037
- US-A- 4 864 484
- US-A- 5 805 032

## Beschreibung

Die Erfindung geht aus von einer elektrischen Schaltung für einen spannungseinprägenden Umrichter mit einer Serienschaltung bestehend aus einer Filterkreiskondensatorbatterie und einer Filterkreisdrosselspule. Eine derartige elektrische Schaltung ist aus der US 5,805,032 bekannt.

Derartige elektrische Schaltungen werden zum Beispiel beim Betrieb von Drehstrommotoren und stromeinprägenden Umrichtern zum sogenannten Absaugen von Oberschwingungen verwendet. Dabei ist es üblich, den oder die Filterkreise auf diejenigen Frequenzen abzustimmen, bei denen Oberschwingungen vorhanden sind, oder bei denen es zu keinen Parallelresonanzen eines Filterkreises mit dem elektrischen Netz kommt.

Bei spannungseinprägenden Umrichtern können der oder die Filterkreise jedoch nicht auf beliebige Kompensationsleistungen ausgelegt werden. Damit ist es nicht ohne weiteres möglich, vorgegebene Grenzwerte für die Oberschwingungen bei derartigen Umrichtern einzuhalten.

Weiterer Stand der Technik ist aus der EP 222 261 A2 bekannt.

Aufgabe der Erfindung ist es, eine elektrische Schaltung für den Einsatz mit einem spannungseinprägenden Umrichter zu schaffen, mit der in einfacher Weise die vorgegebenen Grenzwerte eingehalten werden können.

Diese Aufgabe wird bei einer elektrischen Schaltung der eingangs genannten Art erfindungsgemäß durch die Merkmale des kennzeichnenden Teils des Anspruchs 1 gelöst.

Mit Hilfe des Sperrkreises wird die bestimmende und störende Parallelresonanz eines Filterkreises mit dem elektrischen Netz vermieden. Die an sich zu diesem Zweck vorgesehenen Filterkreise können damit entfallen. Die vorgegebenen Grenzwerte für die Oberschwingungen können damit mit geringerem Aufwand als bisher eingehalten werden.

Bei einer vorteilhaften Weiterbildung der Erfindung ist der Sperrkreis in der Serienschaltung zwischen die Filterkreiskondensatorbatterie und die Filterkreisdrosselspule geschaltet.

Diese Weiterbildung der Erfindung kann nicht nur bei Innenraumanwendungen mit Eisen-Drosseln verwendet werden, sondern zweckmäßigerweise auch bei Freiluftanwendungen, bei denen die Sperrkreisdrossel üblicherweise als eisenfreie Luftkernspule ausgebildet ist.

Bei einer vorteilhaften Ausgestaltung der Erfindung ist die Serienschaltung aus der Filterkreiskondensatorbatterie und der Filterkreisdrosselspule auf die 11. oder eine entsprechende harmonische Oberschwingung derart abgestimmt, so dass dort eine niederohmige Impedanz entsteht. Damit werden die Oberschwingungen um und über dieser Frequenz von der erfindungsgemäßen elektrischen Schaltung abgesaugt und damit begrenzt.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
Figuren.la und 1b zeigen zwei schematische Schaltbilder zweier Ausführungsbeispiele von spannungseinprägenden Umrichtern mit zugehörigen erfindungsgemäßen elektrischen Schaltungen, und

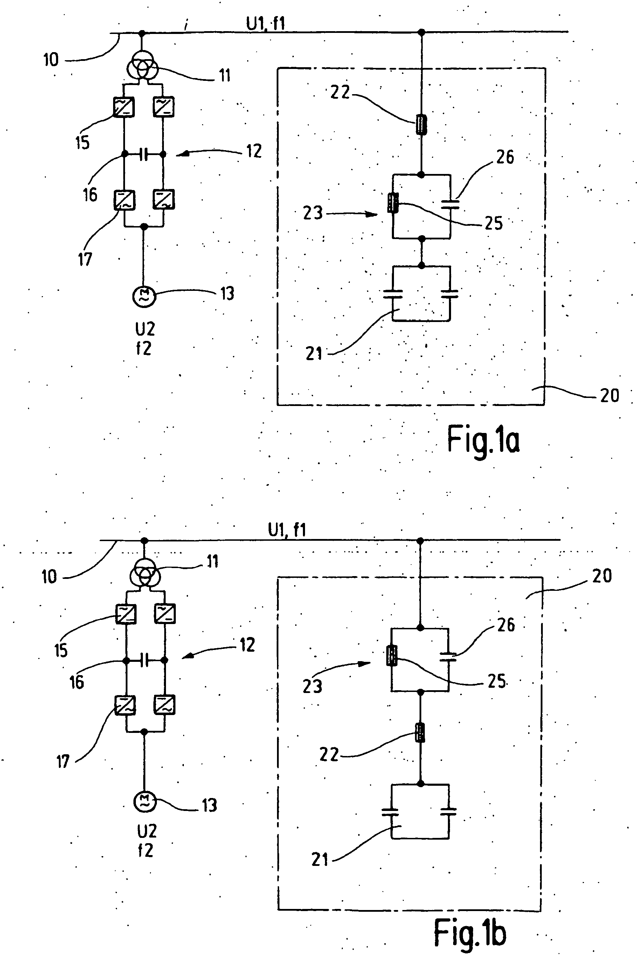

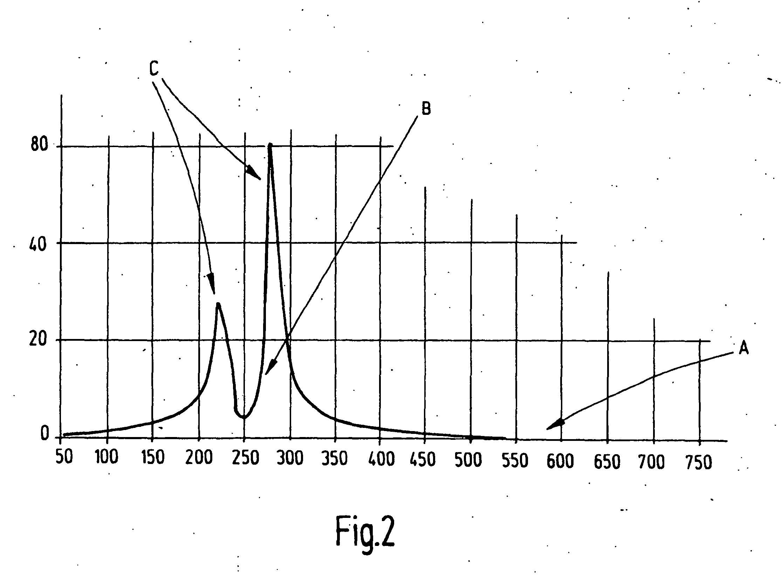

Figur 2 zeigt ein schematisches Diagramm für den Impedanzverlauf, der durch die elektrischen Schaltungen der Figuren 1a und 1b erreicht wird.

Die Figuren 1a und 1b zeigen jeweils eine einpolige Darstellung einer dreipoligen Schaltung. In beiden Figuren ist eine Drehstromsammelschiene 10 vorhanden, die in nicht-dargestellter Weise mit einem elektrischen Netz eines Energieerzeugungsunternehmens oder einer anderen elektrischen Versorgung verbunden ist. Die Drehstromsammelschiene 10 ist üblicherweise, aber nicht zwingend notwendig über einen Transformator 11 und einen spannungseinprägenden Umrichter 12 mit einer Drehstrommaschine 13 verbunden.

Der spannungseinprägende Umrichter 12 weist einen netzseitigen Stromrichter 15, einen Zwischenkreis 16 und einen motorseitigen Stromrichter 17 auf. Von dem Umrichter 12 wird eine.Spannung U1 und eine Frequenz f1, die auf der Drehstromsammelschiene 10 vorhanden sind, in eine Spannung U2 und eine Frequenz f2 für die Drehstrommaschine 13 umgewandelt.

Der spannungseinprägende Umrichter 12 wird beispielhaft 12-pulsig betrieben. Die nachfolgenden Erläuterungen beziehen sich deshalb immer auf einen 12-pulsigen Umrichter. Es versteht sich jedoch, dass die erfindungsgemäße Schaltung auch für einen 18-pulsigen oder 24-pulsigen oder 36-pulsigen oder sonstigen höherpulsigen Umrichter entsprechend angewendet werden kann.

An die Drehstromsammelschiene der Figuren 1a und 1b ist eine elektrische Schaltung 20 angeschlossen, die eine Serienschaltung bestehend aus einer Filterkreiskondensatorbatterie 21, einer Filterkreisdrosselspule 22 und einem Sperrkreis 23 aufweist. Der Sperrkreis 23 seinerseits besteht aus einer Parallelschaltung einer Sperrkreisdrosselspule 25 und einem Sperrkreiskondensator 26.

Die Filterkreiskondensatorbatterie 21 kann aus einer Mehrzahl von Kondensatoren zusammengesetzt sein. Der Filterkreisdrosselspule 22 kann in nicht-dargestellter Weise ein Dämpfungswiderstand parallelgeschaltet sein.

Bei der elektrischen Schaltung 20 der Figur 1a ist die Serienschaltung wie folgt aufgebaut: Die Filterkreisdrosselspule 22 ist direkt an die Drehstromsammelschiene 10 angeschlossen, an die Filterkreisdrosselspule 22 ist der Sperrkreis 23 angeschlossen und an den Sperrkreis 23 ist die Filterkreiskondensatorbatterie 21 angeschlossen.

Bei der elektrischen Schaltung 20 der Figur 1b ist die Serienschaltung wie folgt aufgebaut: Der Sperrkreis 23 ist direkt an die Drehstromsammelschiene 10 angeschlossen, an den Sperrkreis 23 ist die Filterkreisdrosselspule 22 angeschlossen und an den Sperrkreis 23 ist die Filterkreiskondensatorbatterie 21 angeschlossen.

Der spannungseinprägende Umrichter 12 erzeugt netzseitig Oberschwingungen, die an der Drehstromsammelschiene 10 zu' Verzerrungen zumindest der netzseitigen Spannung U1 führen. Üblicherweise werden von dem Energieerzeugungsunternehmen Grenzwerte für derartige Oberschwingungen vorgegeben.

Zur Einhaltung dieser Grenzwerte ist die Serienschaltung aus der Filterkreiskondensatorbatterie 21 und der Filterkreisdrosselspule 22 vorgesehen. Diese Serienschaltung ist dabei in der Nähe oder auf die sogenannte 11. Harmonische, also die größte harmonische Schwingung abgestimmt. Dies bedeutet, dass die Impedanz der elektrischen Schaltung 20 bei dieser Abstimmfrequenz niederohmiger ist als die Impedanz des elektrischen Netzes, mit dem die Drehstromsammelschiene 10 verbunden ist. Aufgrund dieser Niederohmigkeit ist es möglich, die größten Oberschwingungen insbesondere bei der 11. und der 13. Harmonischen von der Drehstromsammelschiene 10 in die elektrische Schaltung 20 "abzusaugen" und damit die verursachten Oberschwingungen in dem elektrischen Netz zu begrenzen.

In der Figur 2 ist die Impedanz der elektrischen Schaltung 20 in Prozent einer Bezugsgröße über der Frequenz in Hertz aufgetragen. Wie bereits erwähnt wurde, bezieht sich die Figur 2 ebenfalls auf einen 12-pulsigen Umrichter.

Die vorstehend erläuterte Abstimmung auf die 11. Harmonische geht aus der Figur 2 dadurch hervor, dass beispielhaft bei 550 Hertz die Impedanz der elektrischen Schaltung 20 nahezu 0 Prozent beträgt. Dies ist in der Figur 2 mit dem Bezugszeichen A gekennzeichnet.

Die Serienschaltung aus Filterkreiskondensatorbatterie 21 und Filterkreisdrosselspule 22 besitzt jedoch immer auch eine Frequenz, bei der ihre Impedanz nicht niederohmiger als die Impedanz des elektrischen Netzes ist, sondern höherohmiger. Diese Frequenz liegt unterhalb der vorgenannten Abstimmfrequenz. Bei dieser Frequenz "saugt" die elektrische Schaltung 20 somit keine Oberschwingungen von der Drehstromsammelschiene 10 ab.

Statt dessen entsteht bei dieser Frequenz eine Verstärkung der Oberschwingungen. Diese Verstärkung ergibt sich aus einer Parallelresonanz der vorgenannten Serienschaltung mit dem speisenden elektrischen Netz.

Die erläuterte Frequenz, bei der die Parallelresonanz und damit die Verstärkung von Oberschwingungen entsteht, ist in der Figur 2 mit dem Bezugszeichen B gekennzeichnet. Beispielhaft liegt diese Frequenz etwa bei der 5. Harmonischen und damit etwa bei 250 Hertz.

Ohne den Sperrkreis 23 der elektrischen Schaltung 20 der Figuren 1a und 1b würde deren Impedanz bei der mit B gekennzeichneten Frequenz einen die beschriebene Parallelresonanz hervorrufenden Hochpunkt aufweisen.

Der in Serie geschaltete Sperrkreis 23 der elektrischen Schaltung 20 der Figuren 1a und 1b hat jedoch zur Folge, dass die Parallelresonanz der aus der Filterkreiskondensatorbatterie 21 und der Filterkreisdrosselspule 22 bestehenden Serienschaltung mit dem elektrischen Netz bei ihrer betreffenden Frequenz nicht zustande kommt. Dies wird dadurch erreicht, dass der Sperrkreis 23 derart abgestimmt ist, dass er bei der mit B gekennzeichneten Frequenz hochohmig resistiv wird. Aufgrund dieser Hochohmigkeit kann die beschriebene Parallelresonanz bei der 5. Harmonischen nicht mehr entstehen. Eine Verstärkung von Oberschwingungen findet damit bei der 5. Harmonischen nicht mehr statt.

Durch den Sperrkreis 23 entstehen jedoch neue Parallelresonanzen, die in der Figur 2 mit dem Bezugszeichen C gekennzeichnet sind. Diese Parallelresonanzen liegen bei nicht-ganzzahligen Oberschwingungsordnungen. Da der spannungseinprägende Umrichter 12 bei den zugehörigen Frequenzen keine wesentlichen Oberschwingüngen erzeugt, stellen diese nicht-ganzzahligen Oberschwingungsordnungen kein Problem im Hinblick auf die für die Oberschwingungen vorgegebenen Grenzwerte dar.

Bei Innenraumanwendungen besteht die Sperrkreisdrossel 25 üblicherweise aus Eisen. Im Kurzschlussfall geht diese Eisen-Drossel in die Sättigung, so dass der der Sperrkreisdrossel 25 parallelgeschaltete Sperrkreiskondensator 26 im Hinblick auf die Spannung nicht belastet wird. Dies ist jedoch gleichbedeutend damit, dass die elektrische Schaltung 20 der Figur 1a, wie auch die elektrische Schaltung 20 der Figur 1b mit derartigen Eisen-Drosseln bestückt und für Innenraumanwendungen eingesetzt werden können.

Bei Freiluftanwendungen wird als Sperrkreisdrossel 25 jedoch üblicherweise eine eisenfreie Luftkernspule verwendet. Diese geht im Kurzschlussfall nicht in die Sättigung. Dadurch würde der der Sperrkreisdrossel 25 parallelgeschaltete Sperrkreiskondensator 26 im Hinblick auf die Spannung stark belastet oder gar überlastet werden.

Wird im letztgenannten Fall jedoch die elektrische Schaltung der Figur 1a verwendet, so hat dies zur Folge, dass aufgrund der vorgeschalteten Filterkreisdrossel 22 der Strom im Kurzschlussfall geringer wird. Damit wird auch die Belastung des Sperrkreiskondensators 26 geringer. Die elektrische Schaltung 20 der Figur 1a ist deshalb auch besonders für den Einsatz von eisenfreien Luftkernspulen als Sperrkreisdrosseln 25 und damit für Freiluftanwendungen geeignet.

Es versteht sich, dass auch mehrere Sperrkreise vorgesehen sein können. Da diese Sperrkreise immer auf bestimmte Frequenzen abgestimmt sind, haben sie keinen nennenswerten Einfluss auf den oder die vorhandenen Filterkreise.

## Patentansprüche

1. Elektrische Schaltung (20) eines Filterkreises für einen an eim elektrisches Netz anschließ baren spannungseinprägenden Umrichter (12) mit einer Serienschaltung bestehend aus einer Filterkreiskondensatorbatterie (21) und einer Filterkreisdrosselspule (22), **dadurch gekennzeichnet, dass** die Serienschaltung zusätzlich einen Sperrkreis (23) aufweist, dass der Sperrkreis (23) eine Sperrkreisdrossel (25) und einen Sperrkreiskondensator (26) aufweist, und dass der Sperrkreis (23) auf diejenige oder in der Nähe derjenigen Oberschwingung abgestimmt ist, bei der ansonsten eine Parallelresonanz mit dem elektrischen Netz entstehen würde.

2. Elektrische Schaltung (20) nach Anspruch 1, **dadurch gekennzeichnet, dass** der Sperrkreis (23) in der Serienschaltung zwischen die Filterkreiskondensatorbatterie (21) und die Filterkreisdrosselspule (22) geschaltet ist.

3. Elektrische Schaltung nach Anspruch 2, **dadurch gekennzeichnet, dass** die Filterkreisdrosselspule (22) an eine Drehstromsammelschiene (10) angeschlossen ist.

4. Elektrische Schaltung (10) nach Anspruch 1, **dadurch gekennzeichnet, dass** der Sperrkreis (23) an eine Drehstromsammelschiene (10) angeschlossen ist, und dass die Filterkreiskondensatorbatterie (21) und die Filterkreisdrosselspule (22) an den Sperrkreis (23) angeschlossen sind.

5. Elektrische Schaltung (20) nach einem der vorstehenden Ansprüche, **dadurch gekennzeichnet, dass** die Serienschaltung aus der Filterkreiskondensatorbatterie (21) und der Filterkreisdrosselspule (22) auf die 11. oder eine entsprechende harmonische Oberschwingung derart abgestimmt ist, dass dort eine niederohmige Impedanz entsteht.

## Claims

1. An electrical circuit (20) of a filter circuit for a voltage-impressing frequency converter (12) which can be connected with an electrical network, having a series connection, consisting of a filter circuit capacitor battery (21) and a filter circuit impedance coil (22), **characterized in that** the series connection has a block circuit (23) in addition, that the block circuit (23) has a block circuit choke (25) and a block circuit capacitor (26), and that the block circuit (23) is tuned to, or to the vicinity of, that harmonic oscillation, at which otherwise a parallel resonance with the electrical network would be created.

2. The electrical circuit (20) in accordance with claim 1, **characterized in that** the block circuit (23) has been switched into the series connection between the filter circuit capacitor battery (21) and the filter circuit impedance coil (22).

3. The electrical circuit (20) in accordance with claim 2, **characterized in that** the filter circuit impedance coil (22) is connected to a rotary current collector rail (10).

4. The electrical circuit (20) in accordance with claim 1, **characterized in that** the block circuit is connected to a rotary current collector rail (10), and that the filter circuit capacitor battery (21) and the filter circuit impedance coil (22) are connected to the block circuit.

5. The electrical circuit (20) in accordance with one of the preceding claims, **characterized in that** the serial connection of the filter circuit capacitor battery (21) and the filter circuit impedance coil (22) is tuned to the 11th, or a corresponding, harmonic oscillation in such a way that low impedance is generated there.

## Revendications

1. Circuit électrique (20) d'un circuit filtrant pour un convertisseur de tension (12) apte à être raccordé à un réseau électrique, avec un montage en série formé par une batterie de condensateurs (21) du circuit filtrant et une bobine de réactance (22) du circuit filtrant, **caractérisé en ce que** le montage en série comporte en plus un circuit d'arrêt (23), **en ce que** le circuit d'arrêt (23) comporte une bobine de réactance (25) et un condensateur (26), et **en ce que** le circuit d'arrêt (23) est accordé à l'oscillation harmonique supérieure ou à proximité de l'oscillation harmonique supérieure, à laquelle se produirait sinon une résonance parallèle avec le réseau électrique.

2. Circuit électrique (20) selon la revendication 1, **caractérisé en ce que** le circuit d'arrêt (23) dans le montage en série est monté entre la batterie de condensateurs (21) du circuit filtrant et la bobine de réactance (22) du circuit filtrant.

3. Circuit électrique selon la revendication 2, **caractérisé en ce que** la bobine de réactance (22) du circuit filtrant est raccordée à une barre collectrice de courant triphasé (10).

4. Circuit électrique (20) selon la revendication 1, **caractérisé en ce que** le circuit d'arrêt (23) est raccordé à une barre collectrice de courant triphasé (10), et **en ce que** la batterie de condensateurs (21) du circuit filtrant et la bobine de réactance (22) du circuit filtrant sont raccordées au circuit d'arrêt (23).

5. Circuit électrique (20) selon l'une quelconque des revendications précédentes, **caractérisé en ce que** le montage en série, formé par la batterie de condensateurs (21) du circuit filtrant et la bobine de réactance (22) du circuit filtrant, est accordé à la 11^{e} oscillation harmonique ou à une oscillation harmonique supérieure correspondante, de telle sorte qu'il s'y produit une basse impédance.
